# FASCICULE DE BREVET EUROPEEN

(11) **EP 2 017 105 B1**
(45) Date de publication et mention de la délivrance du brevet: **15.09.2010**
(21) Numéro de dépôt: 08160454.8
(22) Date de dépôt: 15.07.2008
(51) Int. Cl.: B60J 1/20

(54) **Store d'occultation pour véhicule automobile, à barre de tirage basculante, et véhicule correspondant**
Abdeckungsrollo für Kraftfahrzeug mit Schwenkzugstange und entsprechendes Fahrzeug
Concealing blind for automobile vehicle, with pivoting pulling bar, and corresponding vehicle

(30) Priorité: 16.07.2007 FR 0756526
(43) Date de publication de la demande: 21.01.2009
(73) Titulaire: Advanced Comfort Systems France - ACS France, 79300 Bressuire (FR)
(72) Inventeur: Renault, Julien, 50300 Saint-Senier sous Avranches (FR)
(74) Mandataire: Bioret, Ludovic

(56) Documents cités:
- EP-A- 1 634 743
- DE-A1- 10 064 513
- FR-A- 2 749 878
- FR-A- 2 879 132

## Description

### 1. Domaine de l'invention

Le domaine de l'invention est celui des stores d'occultation pour véhicules automobiles.

Plus précisément, l'invention concerne les stores à rideau amovible, destinés à être déployé pour occulter une surface présentant des bords non parallèles, et par exemple un bord supérieur galbé.

### 2. Solutions de l'art antérieur

Classiquement, un store à enrouleur présente une toile, ou rideau, formant écran, en position déployée, devant une surface vitrée. La toile est susceptible d'être déroulée ou enroulée au travers d'une fente ménagée par exemple dans l'habillage intérieur ou la tablette arrière d'un véhicule, ou encore dans un boîtier solidarisé au véhicule.

Une des extrémités de la toile est montée sur un rouleau, ou tube enrouleur, mobile en rotation. L'autre extrémité de la toile est solidaire d'une barre de tirage.

En position déployée, la toile est essentiellement déroulée du tube d'enroulement, et la barre de tirage vient au voisinage du bord opposé de la baie, par exemple en haut de la surface vitrée, au voisinage du pavillon, pour un store de vitre arrière.

Ce système n'est cependant pas parfaitement adapté pour des surfaces vitrées dont la partie supérieure présente un aspect galbé défini par le design du véhicule, ou plus généralement une direction non parallèle avec le tube enrouleur.

En effet, les stores de véhicule automobile comprennent une barre de tirage rectiligne. Cette dernière n'épouse pas la forme galbée du haut de la surface vitrée.

Une solution particulière a été proposée dans le document de brevet FR 2 879 132, selon laquelle la barre de tirage est adaptée pour basculer et assurer une occultation d'une partie d'extrémité de la surface à occulter non couverte par la toile.

Cependant, cette technique est adaptée uniquement aux stores manuels, dont la barre de tirage doit être fixée ou accrochée à des éléments prévus à cet effet sur la garniture des véhicules. Elle suppose donc une action manuelle d'un utilisateur, qui doit basculer la barre de tirage, puis la fixer.

Cette approche ne peut donc pas être mise en oeuvre pour les stores motorisés, et plus généralement pour les stores dont la barre de tirage est guidée dans des rails.

Par ailleurs, le fait que la barre de tirage soit libre en rotation peut donner une impression de mauvaise qualité, ou à tout le moins de mauvaise qualité perçue pour les utilisateurs. En effet, lorsqu'elle n'est pas fixée, la barre de tirage n'est pas maintenue, et peut donc se déplacer de façon incontrôlée, générer des chocs et du bruit...

Cette technique n'est donc pas adaptée à des véhicules de moyenne ou haute gamme.

### 3. Objectifs de l'invention

L'invention a notamment pour objectif de pallier ces inconvénients de l'art antérieur.

Plus précisément, un premier objectif de l'invention est de fournir un store dont la barre de tirage est guidée dans des rails et occultant efficacement la partie distale de la baie ou surface vitrée, lorsque la toile est déployée, même si les bords de cette surface vitrée sont galbés. La partie distale, ou partie terminale, de la surface vitrée est celle qui est éloignée du tube enrouleur. La partie proximale est celle qui est voisine de ce tube.

L'invention a également pour objectif de fournir un tel store, qui puisse être motorisé.

Un autre objectif de l'invention est de fournir un tel store permettant de recouvrir entièrement la fente de passage lorsque le store est replié.

L'invention a encore pour objectif de fournir un tel store qui soit simple et peu coûteux à mettre en oeuvre.

### 4. Caractéristiques essentielles de l'invention

Ces objectifs, ainsi que d'autres qui apparaîtront par la suite, sont atteints à l'aide d'un store, à enrouleur pour véhicule automobile, comprenant une toile d'occultation dont une première extrémité est solidaire d'un tube enrouleur et une seconde extrémité est solidaire d'une barre de tirage, ladite barre de tirage étant guidée par ses extrémités dans deux rails de guidage et comportant une portion d'occultation mobile en rotation entre deux positions :
- une position d'occultation, sensiblement parallèle au plan d'occultation défini par ladite toile d'occultation, et sensiblement dans le prolongement de ladite toile d'occultation, lorsque cette dernière est déployée, de façon à occulter une portion terminale de la surface à occulter ;
- une position de repos, sensiblement perpendiculaire audit plan d'occultation, dans laquelle elle chevauche une fente de circulation de ladite toile ménagée dans un boîtier ou dans la garniture intérieure dudit véhicule, lorsque ladite toile d'occultation est en position repliée.

Selon l'invention, le store comprend des moyens de contrôle du basculement, agissant sur ladite barre de tirage en fin de course, lorsque ladite toile est déployée, pour assurer le passage de ladite position de repos à ladite position d'occultation.

Ainsi, le basculement de la barre de tirage est contrôlé, et ne s'effectue qu'en fin de course, lorsque la toile est déployée (ou pratiquement déployée). Aucune action manuelle n'est nécessaire, et la qualité perçue est bonne. L'invention est donc notamment bien adaptée aux stores dont le déplacement est motorisé.

Préférentiellement, lesdits moyens de contrôle du basculement assurent le passage de ladite position d'occultation vers ladite position de repos, dès que le repli de ladite toile d'occultation débute.

Selon un mode de mise en oeuvre particulier, lesdits moyens de contrôle du basculement comprennent au moins une butée destinée à entrer en contact avec ladite barre de tirage en fin de course, lorsque ladite toile est déployée.

Cette butée peut notamment agir directement sur la surface, ou portion d'occultation de la barre de tirage.

Ainsi, ladite barre de tirage peut notamment comprendre une surface sensiblement plane d'occultation, une portion de liaison avec ladite toile d'occultation et deux pions latéraux solidarisés par une liaison pivot à des patins guidés dans lesdits rails.

Avantageusement, la ou lesdites butées sont formées sur la garniture intérieure dudit véhicule. Elles peuvent également être solidarisées à d'autres éléments, et par exemple les rails.

Selon une mise en oeuvre particulière, ladite barre de tirage est conformée et/ou comprend des moyens de rappel pour prendre, en l'absence de contrainte, ladite position de repos.

Selon un autre mode de réalisation, lesdits moyens de basculement peuvent être formés dans ou solidarisés à au moins un desdits rails. Par exemple, le rail peut guider le patin pour assurer son basculement, celui-ci étant transmis à la barre de tirage.

Avantageusement, le déplacement d'au moins une desdites extrémités de la barre de tirage dans un desdits rails est motorisé.

Selon un mode de réalisation particulier de l'invention, on prévoit également que la garniture intérieure dudit véhicule présente au moins une surface d'appui, contre laquelle ladite barre de tirage vient en appui, dans ladite position d'occultation.

Ceci permet d'empêcher les vibrations et les chocs, et donc les bruits, pouvant apparaître, notamment lorsque le véhicule roule.

L'invention concerne également un véhicule automobile comprenant au moins un store à enrouleur tel que décrit ci-dessus.

Un tel store peut notamment équiper la vitre arrière dudit véhicule.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un hayon de véhicule automobile équipé d'un store selon l'invention, en position repliée ;
- la figure 2 illustre le hayon de la figure 1, avec le store en position déployée ;
- la figure 3 illustre une portion du hayon, présentant une butée de contrôle du basculement de la barre de tirage du store des figures 1 et 2 ;
- la figure 4 est une vue en coupe de la barre de tirage d'un store selon l'invention ;
- la figure 5 illustre une portion d'une barre de tirage selon l'invention.

### 6. Description d'un mode de réalisation de l'invention

Le principe général de l'invention repose donc sur la réalisation d'une barre de tirage guidée dans des rails et formant une surface rigide d'occultation, solidaire de la toile d'occultation et mobile en rotation par rapport à celle-ci. Ainsi, la surface rigide d'occultation peut passer d'une première position (lorsque le store est replié) à une seconde position (lorsque le store est déployé), et inversement.

Dans la première position, dite position de repos, la surface rigide d'occultation obture la fente de passage par laquelle circule la toile, et épouse un profil défini par l'habillage intérieur du véhicule (au voisinage de la fente).

Dans la seconde position, dite position d'occultation, la surface rigide d'occultation recouvre la portion terminale de la surface vitrée à occulter, et se trouve donc sensiblement dans le même plan que la toile déployée.

Par souci de simplification de la description, on se limite, dans toute la suite de ce document, à décrire le cas particulier d'un hayon équipé d'une surface vitrée dont le haut présente un aspect galbé. L'homme du métier étendra sans difficultés cet enseignement à tous les autres bords d'une surface vitrée et à toutes les autres baies d'un véhicule automobile.

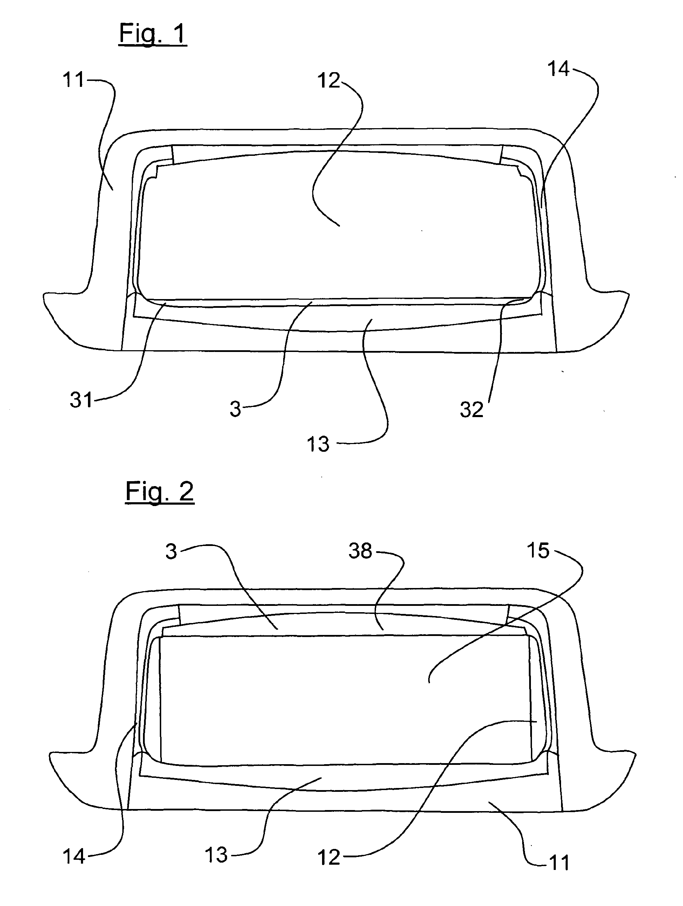

Les figures 1 et 2 illustrent un exemple de hayon portant une vitre arrière de véhicule automobile présentant un store à enrouleur selon un mode de réalisation de l'invention. Ce hayon comporte un cadre 11, entourant une surface vitrée 12. Le cadre 11 et les bords de la surface vitrée 12 sont partiellement couverts par la garniture intérieure 14 du véhicule.

Un boîtier 13, renfermant le tube à enrouleur du store est monté sur le bord inférieur de la surface vitrée 12. Selon un autre mode de réalisation non représenté, le tube à enrouleur peut être dissimulé sous la garniture intérieure 14, ce qui rend alors le boîtier 13 inutile. Une fente de circulation de la toile d'occultation est ménagée dans le boîtier 13 ou dans la garniture de façon à permettre le déploiement de la toile d'occultation.

Une toile d'occultation 15 est enroulée sur le tube à enrouleur, et est liée par son extrémité à une barre de tirage 3. Les extrémités 31 et 32 de cette barre de tirage peuvent coulisser le long de deux rails de guidage dissimulés dans les portions latérales sensiblement horizontales de la garniture intérieure 14. Ainsi, le store peut prendre deux positions : une position repliée, représentée par la figure 1 et dans laquelle la toile d'occultation 15 est essentiellement enroulée et la barre de tirage 3 est située prés du bord inférieur de la surface vitrée 12, contre le boîtier 13 ou la garniture intérieure 14, et une position déployée, représentée par la figure 2 et dans laquelle la toile d'occultation 15 recouvre la quasi-totalité de la surface vitrée 12 et la barre de tirage 3 est située près du bord supérieur de la surface vitrée 12.

Dans la position déployée du store représentée par la figure 2, la barre de tirage 3 est dans une position, dite d'occultation, dans laquelle elle occulte la portion supérieure de la surface vitrée 12. Cette portion ne peut pas en effet être occultée facilement par la toile d'occultation 15, du fait de la forme galbée du bord supérieur de la surface vitrée.

Dans la position repliée du store représentée par la figure 1, la barre de tirage 3 est dans une position, dite position de repos, dans laquelle elle est plaquée contre le boîtier 13 du store enrouleur ou contre la garniture intérieure du véhicule, en chevauchant la fente de circulation de toile qui y est ménagée, de façon à ne pas occulter la partie inférieure de la surface vitrée 12.

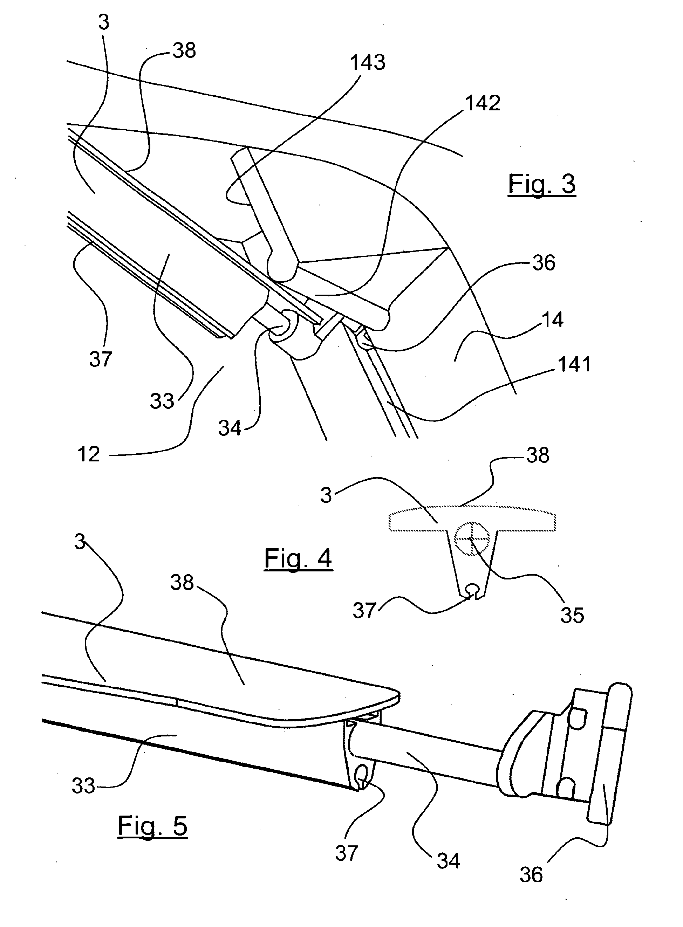

Les figures 4 et 5 montrent respectivement une vue de coupe et une vue partielle en perspective de la barre de tirage 3. Cette barre de tirage comporte une partie centrale 33 et des pièces coulissantes d'extrémités 34. Ces pièces coulissantes 34 comprennent une tige, ou un pion, enfoncée dans une ouverture correspondante de la partie centrale 33, et mobile en translation et en rotation par rapport à cette partie centrale, selon un axe 35 parallèle à la plus grande longueur de la barre de tirage 33.

Les pièces coulissantes comprennent également, dans leur partie éloignée de la partie centrale 33, des coulisseaux 36, ou patins, permettant un coulissement de la barre de tirage dans une direction perpendiculaire à sa plus grande longueur. Comme le représente la figure 3, ces coulisseaux 36 peuvent coulisser dans des rails 141 définis dans la garniture intérieure 14 du véhicule.

Le déplacement dans ces rails 141 des coulisseaux 36, et par conséquent des extrémités de la barre de tirage 3, est de préférence motorisé. Pour cela, les coulisseaux 36 peuvent être liés aux extrémités de câbles de type « push-pull » (de l'anglais « pousser-tirer ») circulant dans les rails 141 et pouvant agir sur ces coulisseaux en les poussant ou en les tirant le long de ces rails. Un moteur, par exemple électrique, agit sur les câbles de façon à déplacer de façon équilibrée les deux extrémités de la barre de tirage 3.

Il est à noter que le déplacement en translation possible entre les pièces coulissantes d'extrémité 34 et la partie centrale 33 rend la longueur totale de la barre de tirage variable. Ceci permet de faire coulisser la barre de tirage 3 dans des rails 141 qui ne sont pas parallèles, pour s'adapter à une forme de baie vitrée dont les côtés ne sont pas parallèles.

La partie centrale 33 de la barre de tirage 3 comprend sur toute sa longueur un élément d'accroche 37 destiné à y fixer l'extrémité de la toile d'occultation 15 du store. Le tube enrouleur comportant un dispositif de rappel tendant à l'enroulement de la toile, la toile d'occultation 15, quand elle est dépliée, est tendue par le tube enrouleur. Cette tension engendre une traction sur l'élément d'accroche 37 et entraîne le maintien de la barre de tirage dans une position, dite position de repos, dans laquelle l'axe 35 de rotation de la partie centrale de la barre de tirage se trouve sensiblement dans le plan défini par la toile d'occultation.

La portion centrale de la barre de tirage comprend également sur toute sa longueur une palette d'occultation 38. Cette palette d'occultation 38, sensiblement plate, est maintenue horizontale, et donc perpendiculaire à la toile d'occultation, quand la barre de tirage 3 est dans la position de repos. Elle reste donc en position horizontale quand la toile d'occultation est repliée, et vient dans ce cas prendre appui sur le boîtier du tube enrouleur ou la garniture intérieure du véhicule, et recouvrir la fente de passage de la toile, qui y est ménagée. Elle permet ainsi, dans cette position, d'empêcher l'introduction de poussière dans la fente et de dissimuler celle-ci.

La palette d'occultation est également maintenue horizontale pendant le déplacement de la barre de tirage le long des rails 141. En revanche, comme le représente la figure 3, une butée 142 est prévue à proximité de chacun des rails 141, sur la trajectoire de la barre de tirage. Cette butée 142 est formée sur la garniture intérieure du véhicule à proximité de l'extrémité supérieure des rails 141, et peut être formée dans la même pièce que le rail, ou être solidarisée à celui-ci.

Cette butée 142 agit sur la palette d'occultation 38 pendant le coulissement vers le haut de la barre de tirage, de façon décalée par rapport au plan passant par l'axe de rotation 35 de la partie centrale et l'élément d'accroche 37 de la toile d'occultation. Cette action a donc pour effet de faire tourner la partie mobile 33 de la barre de tirage jusqu'à une position d'occultation, dans laquelle la palette d'occultation 38 est sensiblement verticale et parallèle à la toile d'occultation.

Une surface d'appui 143 située à proximité de la butée 142 maintient ensuite la barre de tirage dans cette position d'occultation tant que le store reste en position déployée. En revanche, dès le début du mouvement d'enroulement de la toile d'occultation 15, et donc de descente de la barre de tirage 3 le long des rails 141, la palette d'occultation 38 se dégage de la butée 142 et la barre de tirage 3 reprend donc, sous l'effet de la traction exercée par la toile d'occultation 15, sa position de repos.

Comme le montre la figure 2, la palette d'occultation 38 est d'une forme permettant, quand le store est déployé et la barre de tirage 3 est en position d'occultation, d'occulter la portion de la surface vitrée 12 qui ne peut pas être occultée par un store conventionnel, du fait de la forme galbée du bord supérieur de la surface vitrée 12.

Il est bien évident que la réalisation de l'invention ne se limite pas à l'exemple exposé ci-dessus, et qu'il peut être adapté sans difficultés particulières par l'homme du métier. En particulier, la forme de la palette d'occultation 38 peut être adaptée pour occulter une vitre non symétrique, ce qui peut permettre d'adapter le store à des vitres latérales de véhicule.

De même, les moyens de basculement peuvent être formés directement dans le rail, sans qu'il soit nécessaire d'utiliser une butée. Par exemple, le rail peut guider le patin pour assurer son basculement, celui-ci étant transmis à la barre de tirage afin de la faire pivoter. Dans ce cas, bien évidemment, la totalité de la barre de tirage est mobile en rotation, et non uniquement sa portion d'occultation

## Revendications

1. Store à enrouleur pour véhicule automobile, comprenant une toile d'occultation (15) dont une première extrémité est solidaire d'un tube enrouleur et une seconde extrémité est solidaire d'une barre de tirage (3),
ladite barre de tirage (3) étant guidée par ses extrémités (31, 32) dans deux rails de guidage et comportant une portion d'occultation mobile en rotation entre deux positions :
- une position d'occultation, sensiblement parallèle au plan d'occultation défini par ladite toile d'occultation (15), et sensiblement dans le prolongement de ladite toile d'occultation (15), lorsque cette dernière est déployée, de façon à occulter une portion terminale de la surface à occulter;
- une position de repos, sensiblement perpendiculaire audit plan d'occultation, dans laquelle elle chevauche une fente de circulation de ladite toile ménagée dans un boîtier (13) ou dans la garniture intérieure (14) dudit véhicule, lorsque ladite toile d'occultation (15) est en position repliée,
**caractérisé en ce qu'**il comprend des moyens de contrôle du basculement, agissant sur ladite barre de tirage (3) en fin de course, lorsque ladite toile est déployée, pour assurer le passage de ladite position de repos à ladite position d'occultation.

2. Store à enrouleur selon la revendication 1, **caractérisé en ce que** lesdits moyens de contrôle du basculement assurent le passage de ladite position d'occultation vers ladite position de repos, dès que le repli de ladite toile d'occultation (15) débute.

3. Store à enrouleur selon l'une quelconque des revendications 1 et 2, **caractérisé en ce que** lesdits moyens de contrôle du basculement comprennent au moins une butée (142) destinée à entrer en contact avec ladite barre de tirage (3) en fin de course, lorsque ladite toile est déployée.

4. Store à enrouleur selon l'une quelconque des revendications 1 à 3, **caractérisé en ce que** ladite barre de tirage (3) comprend une surface sensiblement plane d'occultation (38), une portion de liaison avec ladite toile d'occultation (15) et deux pions latéraux solidarisés par une liaison pivot à des patins guidés dans lesdits rails (141).

5. Store à enrouleur selon l'une quelconque des revendications 3 et 4, **caractérisé en ce que** la ou lesdites butées sont formées sur la garniture intérieure (14) dudit véhicule.

6. Store à enrouleur selon l'une quelconque des revendications 1 à 5, **caractérisé en ce que** ladite barre de tirage (3) est conformée et/ou comprend des moyens de rappel pour prendre, en l'absence de contrainte, ladite position de repos.

7. Store à enrouleur selon l'une quelconque des revendications 1 et 2, **caractérisé en ce que** lesdits moyens de basculement sont formés dans, ou solidarisés à, au moins un desdits rails (141).

8. Store à enrouleur selon l'une quelconque des revendications 1 à 7, **caractérisé en ce que** le déplacement d'au moins une desdites extrémités (31, 32) de la barre de tirage (3) dans un desdits rails (141) est motorisé.

9. Store à enrouleur selon l'une quelconque des revendications 1 à 8, **caractérisé en ce que** la garniture intérieure (14) dudit véhicule présente au moins une surface d'appui (143), contre laquelle ladite barre de tirage (3) vient en appui, dans ladite position d'occultation.

10. Véhicule automobile comprenant au moins un store à enrouleur, comprenant une toile d'occultation (15) dont une première extrémité est solidaire d'un tube enrouleur et une seconde extrémité est solidaire d'une barre de tirage (3), ladite barre de tirage (3) étant guidée par ses extrémités (31, 32) dans deux rails de guidage et comportant une portion d'occultation mobile en rotation entre deux positions :
- une position d'occultation, sensiblement parallèle au plan d'occultation défini par ladite toile d'occultation (15), et sensiblement dans le prolongement de ladite toile d'occultation (15), lorsque cette dernière est déployée, de façon à occulter une portion terminale de la surface à occulter ;
- une position de repos, sensiblement perpendiculaire audit plan d'occultation, dans laquelle elle chevauche une fente de circulation de ladite toile ménagée dans un boîtier (13) ou dans la garniture intérieure (14) dudit véhicule, lorsque ladite toile d'occultation (15) est en position repliée,
**caractérisé en ce qu'**il comprend des moyens de contrôle du basculement, agissant sur ladite barre de tirage (3) en fin de course, lorsque ladite toile est déployée, pour assurer le passage de ladite position de repos à ladite position d'occultation.

11. Véhicule automobile selon la revendication 10, **caractérisé en ce que** ledit store équipe la vitre arrière dudit véhicule.

## Claims

1. Roller blind for a motor vehicle, comprising a screening web (15), a first end of which is fixedly joined to a roller tube and a second end of which is fixedly joined to a pulling bar (3),
the pulling bar (3) being guided by the ends (31, 32) thereof in two guiding rails and comprising a screening portion which is rotationally movable between two positions:
- a screening position which is substantially parallel with a screening plane defined by the screening web (15), and substantially in continuation of the screening web (15) when it is deployed, in order to screen an end portion of the surface to be screened;
- an idle position which is substantially perpendicular relative to the screening plane and in which it overlaps a travel aperture of the web provided in a casing (13) or in the interior fitting (14) of the vehicle, when the screening web (15) is in a folded position,
**characterised in that** it comprises pivot control means which act on the pulling bar (3) at the end of its travel, when the web is deployed, in order to ensure movement from the idle position to the screening position.

2. Roller blind according to claim 1, **characterised in that** the pivot control means ensure movement from the screening position to the idle position as soon as folding of the screening web (15) begins.

3. Roller blind according to either claim 1 or claim 2, **characterised in that** the pivot control means comprise at least one stop (142) which is intended to move into contact with the pulling bar (3) at the end of its travel, when the web is deployed.

4. Roller blind according to any one of claims 1 to 3, **characterised in that** the pulling bar (3) comprises a substantially planar screening surface (38), a portion for connection to the screening web (15) and two lateral pins which are fixedly joined by means of a pivot joint to runners which are guided in the rails (141).

5. Roller blind according to either claim 3 or claim 4, **characterised in that** the stop(s) is/are formed on the interior fitting (14) of the vehicle.

6. Roller blind according to any one of claims 1 to 5, **characterised in that** the pulling bar (3) is shaped and/or comprises return means in order to assume, in the absence of any stress, the idle position.

7. Roller blind according to either claim 1 or claim 2, **characterised in that** the pivot means are formed in, or are fixedly joined to, at least one of the rails (141).

8. Roller blind according to any one of claims 1 to 7, **characterised in that** the movement of at least one of the ends (31, 32) of the pulling bar (3) in one of the rails (141) is motorised.

9. Roller blind according to any one of claims 1 to 8, **characterised in that** the interior fitting (14) of the vehicle has at least one abutment surface (143), against which the pulling bar (3) moves into abutment, in the screening position.

10. Motor vehicle comprising at least one roller blind, comprising a screening web (15), a first end of which is fixedly joined to a roller tube and a second end of which is fixedly joined to a pulling bar (3), the pulling bar (3) being guided by the ends (31, 32) thereof in two guiding rails and comprising a screening portion which is rotationally movable between two positions:
- a screening position which is substantially parallel with a screening plane defined by the screening web (15), and substantially in continuation of the screening web (15), when it is deployed, in order to screen an end portion of the surface to be screened;
- an idle position which is substantially perpendicular relative to the screening plane and in which it overlaps an aperture for travel of the web provided in a casing (13) or in the interior fitting (14) of the vehicle when the screening web (15) is in a folded position,
**characterised in that** it comprises pivot control means which act on the pulling bar (3) at the end of its travel, when the web is deployed, in order to ensure movement from the idle position to the screening position.

11. Motor vehicle according to claim 10, **characterised in that** the blind is provided for the rear window of the vehicle.

## Patentansprüche

1. Rollo für Kraftfahrzeug mit einer Abdeckbahn (15), bei welcher ein erstes Ende mit einem Wickelrohr und ein zweites Ende mit einer Zugstange (3) verbunden ist, wobei die Zugstange (3) über ihre Enden (31, 32) in zwei Führungsschienen geführt ist und ein Abdeckteil aufweist, welches durch Rotation zwischen zwei Positionen beweglich ist:
- einer Abdeckposition, welche annähernd parallel zur durch die Abdeckbahn (15) definierten Abdeckebene ist und annähernd in der Verlängerung der Abdeckbahn (15) liegt, wenn diese Letztere ausgefahren ist, so dass ein Endteil der abzudeckenden Fläche abgedeckt wird;
- einer Ruheposition, welche annähernd senkrecht zu der Abdeckebene ist und in welcher sie einen Spalt zum Durchlass der Bahn, welcher in einem Gehäuse (13) oder in der Innenverkleidung (14) des Fahrzeugs angeordnet ist, überlappt, wenn sich die Abdeckbahn (15) in eingefahrener Position befindet,
**dadurch gekennzeichnet, dass** es Mittel zur Schwenkkontrolle umfasst, welche in der Endlage auf die Zugstange (3) wirken, wenn die Bahn ausgefahren ist, zum Sicherstellen des Übergangs von der Ruheposition in die Abdeckposition.

2. Rollo nach Anspruch 1, **dadurch gekennzeichnet, dass** die Mittel zur Schwenkkontrolle den Übergang von der Abdeckposition zu der Ruheposition sicherstellen, sobald das Einfahren der Abdeckbahn (15) beginnt.

3. Rollo nach einem der Ansprüche 1 und 2, **dadurch gekennzeichnet, dass** die Mittel zur Schwenkkontrolle mindestens einen Anschlag (142) umfassen, welcher dazu bestimmt ist, mit der Zugstange (3) in der Endlage in Berührung zu kommen, wenn die Bahn ausgefahren ist.

4. Rollo nach einem der Ansprüche 1 bis 3, **dadurch gekennzeichnet, dass** die Zugstange (3) eine annähernd ebene Abdeckfläche (38), einen Teil zur Verbindung mit der Abdeckbahn (15) sowie zwei seitliche Stifte umfasst, welche durch eine Drehverbindung an den in den Schienen (141) geführten Schuhen ausgebildet sind.

5. Rollo nach einem der Ansprüche 3 und 4, **dadurch gekennzeichnet, dass** der oder die Anschläge auf der Innenverkleidung (14) des Fahrzeugs gebildet sind.

6. Rollo nach einem der Ansprüche 1 bis 5, **dadurch gekennzeichnet, dass** die Zugstange (3) ausgestaltet ist und/oder Rückstellmittel umfasst zum Einnehmen der Ruheposition ohne Beanspruchung.

7. Rollo nach einem der Ansprüche 1 und 2, **dadurch gekennzeichnet, dass** die Schwenkmittel in zumindest einer der Schienen (141) gebildet sind oder mit zumindest einer der Schienen (141) verbunden sind.

8. Rollo nach einem der Ansprüche 1 bis 7, **dadurch gekennzeichnet, dass** die Verstellung zumindest eines der Enden (31, 32) der Zugstange (3) in einer der Schienen (141) motorisch ist.

9. Rollo nach einem der Ansprüche 1 bis 8, **dadurch gekennzeichnet, dass** die Innenverkleidung (14) des Fahrzeugs mindestens eine Stützoberfläche (143) aufweist, an welcher die Zugstange (3) in der Abdeckposition zur Auflage kommt.

10. Kraftfahrzeug mit mindestens einem Rollo mit einer Abdeckbahn (15), bei welcher ein erstes Ende mit einem Wickelrohr und ein zweites Ende mit einer Zugstange (3) verbunden ist, wobei die Zugstange (3) über ihre Enden (31, 32) in zwei Führungsschienen geführt ist und ein Abdeckteil aufweist, welches durch Rotation zwischen zwei Positionen beweglich ist:
- einer Abdeckposition, welche annähernd parallel zur durch die Abdeckbahn (15) definierten Abdeckebene ist und annähernd in der Verlängerung der Abdeckbahn (15) liegt, wenn diese Letztere ausgefahren ist, so dass ein Endteil der abzudeckenden Fläche abgedeckt wird;
- einer Ruheposition, welche annähernd senkrecht zu der Abdeckebene ist und in welcher sie einen Spalt zum Durchlass der Bahn, welcher in einem Gehäuse (13) oder in der Innenverkleidung (14) des Fahrzeugs angeordnet ist, überlappt, wenn sich die Abdeckbahn (15) in eingefahrener Position befindet,
**dadurch gekennzeichnet, dass** es Mittel zur Schwenkkontrolle umfasst, welche in der Endlage auf die Zugstange (3) wirken, wenn die Bahn ausgefahren ist, zum Sicherstellen des Übergangs von der Ruheposition in die Abdeckposition.

11. Kraftfahrzeug nach Anspruch 10, **dadurch gekennzeichnet, dass** das Rollo die Heckscheibe des Fahrzeugs ausstattet.
